# FASCICULE DE BREVET EUROPEEN

(11) **EP 0 522 562 B1**
(45) Date de publication et mention de la délivrance du brevet: **14.01.1998**
(21) Numéro de dépôt: 92111717.2
(22) Date de dépôt: 09.07.1992
(51) Int. Cl.: C08K 13/02

(54) **Composition à haute résistance à la propagation du feu**
Zusammensetzung mit hohem Widerstand gegen Feuerausbreitung
Composition with high resistance to fire propagation

(30) Priorité: 09.07.1991 FR 9108591
(43) Date de publication de la demande: 13.01.1993
(73) Titulaire: ALCATEL CABLE, 92111 Clichy Cédex (FR)
(72) Inventeur: Prigent, Madeleine, F-91460 Marcoussis (FR); Vivet, Jacky, F-18500 Mehun sur Yevre (FR); Demay, Jean-Noel, F-69390 Vernaison (FR); Giraud, Bernard, F-91460 Marcoussis (FR); Chaillie, Alain, F-78000 Versailles (FR)
(74) Mandataire: Buffière, Michelle

(56) Documents cités:
- EP-A- 488 204
- DD-A- 241 807
- GB-A- 2 060 652
- PATENT ABSTRACTS OF JAPAN vol. 14, no. 106 (C-694)(4049) 27 Février 1990 & JP-A-1 311 143 ( SHOWA ELECTRIC WIRE & CABLE KK ) 15 Décembre 1989
- PATENT ABSTRACTS OF JAPAN vol. 13, no. 255 (C-606)(3603) 13 Juin 1989 & JP-A-1 060 642 ( SHOWA ELECTRIC WIRE AND CABLE KK ) 7 Mars 1989

## Description

La présente invention porte sur les compositions présentant une résistance élevée à la propagation d'un incendie. Ces compositions sont utilisables comme matériau de revêtement dans nombreuses applications et en particulier pour les câbles devant pouvoir résister un certain temps aux fortes chaleurs d'un incendie. Ces câbles résistants au feu peuvent tout aussi bien être des câbles électriques et/optiques de transport d'énergie et/ou de transmission d'informations.

Ces câbles résistants à la propagation du feu ont leur revêtement d'isolation et/ou de protection, entourant leurs conducteurs, réalisé à base d'un polymère ou copolymère, comme pour tout autre câble classique. Ce polymère ou copolymère est en outre ignifugé pour que sa tenue au feu, initialement médiocre et insuffisante, soit rendue satisfaisante pour des conditions définies.

Dans les câbles, les polymères ou copolymères de revêtement et/ou de protection les plus utilisés sont les polyoléfines et parmi celles-ci le polyéthylène. L'ignifugation est assurée de manière connue en incorporant un matériau retardateur au feu dans le polymère ou copolymère de base de revêtement.

Parmi les matériaux retardateurs au feu ainsi utilisés, on connaît notamment :
- les dérivés halogénés,
- le phosphore rouge ou les dérivés phosphorés greffés sur la chaîne de polymère de base,
- les hydroxydes métalliques, en particulier l'hydroxyde de magnésium et le trihydrate d'alumine, utilisés seuls ou associés à du borate de zinc.

Ces matériaux permettent l'obtention d'une composition à comportement au feu satisfaisant mais présentent les uns et les autres leurs inconvénients.

En particulier, l'utilisation des dérivés halogénés tend à disparaître en raison des fumées toxiques et/ou corrosives qu'ils dégagent lors de leur combustion. Le phosphore rouge et les dérivés phosphorés peuvent être dangereux, ils sont en outre de manipulation difficile et longue. Les hydroxydes métalliques nécessitent quant à eux une utilisation en part importante dans la composition, pour l'obtention d'une bonne tenue au feu; ils peuvent en outre, au moins pour certains d'entre eux tels que l'hydroxyde d'aluminium, dégrader la caractéristique d'isolation électrique souhaitée de la composition, ne devenant alors utilisable que pour le revêtement de protection des câbles électriques et non le revêtement d'isolation de leurs conducteurs.

De nombreuses compositions à haute résistance au feu, utilisables pour la protection et l'isolation de fils et câbles électriques sont déjà connues.

Le document US-A- 4 387 176 décrit une composition comportant un thermoplastique, un silicone de base sous forme de fluide ou de gomme, un sel d'un métal du groupe IIA du tableau périodique des éléments et une résine silicone soluble dans le silicone de base, en particulier une résine MQ,

Le document US-A- 4 273 691 décrit une composition comportant un pourcentage important de polyoléfine, de 1 à 20 % de silicone et de 1 à 20 % d'un sel d'un acide carboxylique et d'un métal du groupe IIA du tableau périodique des éléments.

Le document US-A-468 0229 décrit une composition comportant un composé de base oléofinique, une gomme silicone et un composé organique de plomb, notamment un phtalate dibasique de plomb.

Le document EP-A- 0393 959 décrit une composition comportant un copolymère d'éthylène avec un ou des comonomères choisis dans le groupe formé par les acrylates alkyl, les méthacrylates alkyl, l'acide acrylique, l'acide méthacrylique et l'acétate de vinyle, un silicone et une charge de remplissage constituée par un composé d'un métal du groupe IIA du tableau périodique des éléments, mais ni hydroxyde ni hydraté.

La présente invention porte sur une nouvelle composition à résistance au feu élevée utilisable pour les applications visées ci-avant, qui présente une tenue au feu nettement améliorée par rapport à celle des compositions connues.

La composition à haute résistance à la propagation du feu, selon la présente invention, comportant au moins un polymère ou copolymère d'isolation et/ou de protection, initialement exempt de matériau retardateur de feu et dans ces conditions dit matériau de base, de tenue au feu en tant que telle médiocre, un silicone et un carbonate de calcium est caractérisée en ce qu'elle comporte en outre un sel d'un métal sélectionné parmi le plomb, le manganèse, le cobalt, le fer, le nickel et l'aluminium.

La composition selon la présente invention présente en outre au moins l'une des caractéristiques suivantes :
- ledit sel du métal sélectionné est un stéarate;
- ledit métal sélectionné est en particulier le plomb;
- ledit sel de plomb est à base d'acide carboxylique;
- ledit sel de plomb est un sulfate de plomb;
- ladite composition est réticulée;
- ladite composition comporte, de préférence, rapportées à 100 parties de son poids, de 45 à 55 parties dudit matériau de base, de 20 à 40 parties de carbonate de calcium, de 10 à 20 parties de silicone et de moins de 5 parties de sel du métal sélectionné;
- ladite composition comporte en outre un agent de mise en oeuvre spécifique.

La présente invention porte également sur un câble non propagateur d'incendie et résistant au feu, à âme conductrice entourée par au moins une gaine d'isolation et/ou de protection constituée en cette composition.

Les caractéristiques et avantages de la présente invention sont précisés et complétés ci-après.

La composition à haute résistance à la propagation du feu est réalisée à partir d'un polymère ou copolymère, utilisé de manière habituelle pour les revêtements d'isolation électrique et/ou de protection mais ne présentant aucune particularité quant à la tenue au feu souhaitée, dans lequel ont été ajoutés en particulier un silicone, de la craie et un sel de l'un des métaux indiqués ci-avant, en particulier un stérarate de plomb.

Alors que le silicone, la craie et ce sel n'ont en tant que tels, séparément, aucune propriété particulière de tenue au feu, et notamment pas celle recherchée, la demanderesse a constaté que leur mélange au polymère ou copolymère de base conduit à une composition de comportement au feu surprenant et largement amélioré par rapport aux compositions anti-feu connues précédemment utilisées.

Les matériaux de base selon l'invention sont choisis parmi les polyoléfines, en particulier le polyéthylène, le polyproprylène, les copolymères d'éthylène (EPDM, copolymère d'éthylène et d'acrylate alkyl, copolymère d'éthylène et d'acétate de vinyle, notamment) et les polymères sur lesquels sont greffés des groupements fonctionnels; le polybutylène térephtalate, le polyméthyle méthacrylate, les polyamides et les polycarbonates peuvent également être utilisés comme base des compositions conformes à l'invention.

Le silicone peut être utilisé sous forme de fluide ou de gomme. Ce terme "silicone" inclut les polysiloxanes, comportant ou non des groupements vinyliques qui favorisent leur réticulation.

La charge de remplissage est en particulier de la craie enrobée ou non.

Le sel de métal sélectionné est de préférence un sel de plomb et en particulier le stéarate de plomb, mais peut en variante être un sel de plomb à base d'autres acides carboxyliques, tels qu'un oléate, palmitate ou laurate, ou être un sulfate de plomb.

Des agents connus de mise en oeuvre, tels que plastifiant, huile, silane, anti-oxydant, anti-U.V, peuvent bien entendu être utilisés dans le mélange des quatre constituants essentiels de la composition.

Le mélange et le ou les agents additionneles éventuels peuvent être réticulés par peroxydes, par irradiation ou par silane.

Des résultats comparatifs de tenue au feu, traduite par l'indice limite d'oxygène (ILO), ont été indiqués dans les tableaux I et II ci-après pour des compositions selon l'art connu et dans le tableau III pour des compositions selon l'invention. Dans ces tableaux les constituants essentiels des compositions ont été indiqués avec des concentrations différentes, exprimées en pourcentage de poids. Ces compositions peuvent en outre comporter l'un ou l'autre des agents de mise en oeuvre, tels que ceux mentionnés ci-avant, en faible concentration et ne figurant pas dans les tableaux.

**TABLEAU I**

| | | | | | | | |
|---|---|---|---|---|---|---|---|
| Copolymère éthylène/Alkyl acrylate | 100 | 60 | 50 | 66 | 40 | 57 | 56 |
| Silicone | | | 50 | 34 | 20 | 14 | 14 |
| Craie (Ca CO₃) | | 40 | | | 40 | 28 | 28 |
| Peroxyde de dicumyle | | | | | | | 1 |
| ILO (Indice limite d'oxygène) | 19 | 22 | 25,5 | 26,5 | 31 | 31 | 25 |

**TABLEAU II**

| | | | | | |
|---|---|---|---|---|---|
| Polyéthylène | 91 | 91 | 91 | 91 | 91 |
| Silicone | 5 | 5 | 5 | 5 | 5 |
| Stéarate de calcium | | | | 3 | |
| Stéarate de plomb | | 3 | | | 3 |
| Phtalate dibasique de plomb | | | 3 | | |
| Peroxyde de dicumyle | | | | | 1 |
| ILO | 25,5 | 30 | 26,5 | 25,5 | 26,5 |

**TABLEAU III**

| | | | | | |
|---|---|---|---|---|---|
| Polyéthylène | 53 | | | | |
| Copolymère éthylène/acrylate d'alkyl (1) | | 53 | | 53 | 53 |
| Copolymère éthylène/acrylate d'alkyl (2) | | | 53 | | |
| Silicone | 14 | 14 | 14 | 14 | 14 |
| Craie | 28 | 28 | 28 | 28 | 28 |
| Stéarate de plomb | 3 | 3 | 3 | | 3 |
| Stéarate de manganèse | | | | 3 | |
| Peroxyde de dicumyle | | | | | 1 |
| ILO | 35 | 38 | 45 | 38 | 37,5 |

Les copolymères (1) et (2) sont deux copolymères différents d'éthylène et d'acrylate d'alkyl, ayant des pourcentages d'acrylate différents.

Les résultats des tableaux I et II montrent que la tenue au feu du copolymère d'éthylène seul ou avec de la craie uniquement est médiocre. Ils mettent en évidence l'amélioration sensible obtenue par l'ajout au polymère de base soit de silicone et d'un composé d'un métal de groupe IIA, tel qu'un carbonate ou stéarate de calcium, ou en variante de silicone et d'un sel de plomb. Le tableau III fait ressortir clairement en regard de quelques exemples donnés la tenue au feu particulièrement élevée des compositions selon l'invention ainsi que traduit par un indice limite d'oxygène de l'ordre et même supérieur à 35 qu'elles présentent.

De plus, on indique que la réticulation des compositions selon cette invention ne modifie pas ou très peu leur tenue au feu, alors qu'elle abaissait notablement la tenue au feu des compositions de l'art connu.

Les concentrations des quatre constituants principaux peuvent bien entendu être variables d'une composition à une autre. D'une manière générale une composition selon la présente invention comporte, rapportées à 100 parties de son poids, plus de 40 parties dudit matériau de base, moins de 40 parties de carbonate de calcium, moins de 30 parties de silicone et moins de 10 parties de sel de plomb.

## Revendications

1. Composition à haute résistance à la propagation du feu, comportant au moins un polymère choisi parmi les polyoléfines, le polybutylène térephthalate, le polyméthyle méthacrylate, les polyamides et les polycarbonates, initialement exempt de matériau retardateur de feu et dans ces conditions dit matériau de base, et comportant un silicone et un carbonate de calcium incorporés dans ledit matériau de base, caractérisée en ce qu'elle comporte, en outre, un sel d'un métal sélectionné parmi le plomb, le manganèse, le cobalt, le fer, le nickel et l'aluminium, également incorporé dans ledit matériau de base.

2. Composition selon la revendication 1, caractérisée en ce qu'elle comporte, rapportées à 100 parties de son poids, plus de 40 parties dudit matériau de base, moins de 40 parties de carbonate de calcium, moins de 30 parties de silicone et moins de 10 parties de sel du métal sélectionné.

3. Composition selon l'une des revendications 1 et 2, caractérisée en ce qu'elle comporte, rapportées à 100 parties de son poids, de 45 à 55 parties dudit matériau de base, de 20 à 40 parties de carbonate de calcium, de 10 à 20 parties de silicone et de moins de 5 parties de sel du métal sélectionné.

4. Composition selon l'une des revendications 1 à 3, caractérisée en ce que le matériau de base est un polymère ou un mélange de polymères sur lequel sont greffés des groupements fonctionnels.

5. Composition selon l'un des revendications 1 à 4, caractérisée en ce qu'elle comporte en outre au moins un agent de mis en oeuvre, choisi notamment parmi une huile, un plastifiant, un anti-oxydant, un anti-penétrant aux UV, un silane.

6. Composition selon l'une des revendications 1 à 5, caractérisée en ce que ledit matériau de base comporte une polyoléfine et en particulier un copolymère d'éthylène.

7. Composition selon l'une des revendications 1 à 5 caractérisée en ce que ledit matériau de base est un matériau thermoplastique, choisi parmi les polyoléfines, le polybutylène téréphtalate, les polyamides et les polycarbonates.

8. Composition selon l'une des revendications 1 à 7, caractérisée en ce qu'elle est réticulée.

9. Composition selon l'une des revendications 1 à 8, caractérisée en ce que ledit sel est un stéarate du métal sélectionné.

10. Composition selon l'une des revendications 1 à 8, caractérisée en ce que ledit sel de métal sélectionné est choisi parmi les sels de plomb à base d'acides carboxyliques, en particulier le stéarate de plomb, et les sulfates de plomb.

11. Câble résistant à la propagation de feu, à âme conductrice entourée par un revêtement d'isolation et/ou de protection, caractérisé en ce que ledit revêtement est constitué par la composition selon l'une des revendications 1 à 10.

## Patentansprüche

1. Gegen die Flammenausbreitung widerstandsfähiger Stoff, der mindestens ein Polymer, das aus den Polyolefinen, dem Polybutylenterephthalat, dem Polymethylmethacrylat, den Polyamiden und den Polycarbonaten ausgewählt wird und ursprünglich kein feuerhemmendes Material aufweist und unter diesen Bedingungen "Basismaterial" genannt wird, und ein Silikon und ein Calciumcarbonat aufweist, die in das Basismaterial eingefügt sind, dadurch gekennzeichnet, daß er weiter ein Salz eines Metalls aufweist, das ausgewählt wird aus Blei, Mangan, Kobalt, Eisen, Nickel und Aluminium und ebenfalls in das Basismaterial eingefügt ist.

2. Stoff nach Anspruch 1, dadurch gekennzeichnet, daß er in Bezug auf 100 Gewichtsteile mehr als 40 Teile Basismaterial, weniger als 40 Teile Calciumcarbonat, weniger als 30 Teile Silikon und weniger als 10 Teile Bleisalz enthält.

3. Stoff nach einem der Ansprüche 1 und 2, dadurch gekennzeichnet, daß er in Bezug auf 100 Gewichtsteile 45 bis 55 Teile Basismaterial, 20 bis 40 Teile Calciumcarbonat, 10 bis 20 Teile Silikon und weniger als 5 Teile des gewählten Metallsalzes enthält.

4. Stoff nach einem der Ansprüche 1 bis 3, dadurch gekennzeichnet, daß das Basismaterial ein Polymer oder eine Mischung von Polymeren ist und aufgepfropfte funktionale Gruppierungen enthält.

5. Stoff nach einem der Ansprüche 1 bis 4, dadurch gekennzeichnet, daß er mindestens ein Anwendungsmittel aufweist, das aus einem Öl, einem Weichmacher, einem Oxidationshemmer, einem UV-Schutz und einem Silan ausgewählt wird.

6. Stoff nach einem der Ansprüche 1 bis 5, dadurch gekennzeichnet, daß das Basismaterial ein Polyolefin und insbesondere ein Äthylen-Copolymer enthält.

7. Stoff nach einem der Ansprüche 1 bis 5, dadurch gekennzeichnet, daß das Basismaterial ein thermoplastisches Material ist, das aus den Polyolefinen, dem Polybutylenterephthalat, den Polyamiden und den Polycarbonaten ausgewählt wird.

8. Stoff nach einem der Ansprüche 1 bis 7, dadurch gekennzeichnet, daß er vernetzt ist.

9. Stoff nach einem der Ansprüche 1 bis 8, dadurch gekennzeichnet, daß das Salz ein Stearat des gewählten Metalls ist.

10. Stoff nach einem der Ansprüche 1 bis 8, dadurch gekennzeichnet, daß das gewählte Metallsalz ausgewählt wird unter den Bleisalzen auf der Basis von Carboxylsäuren, insbesondere Bleistearat, und den Bleisulfaten.

11. Der Flammenausbreitung widerstehendes Kabel mit einem leitendem Kern, der mit einer Isolier- und/oder Schutzhülle versehen ist, dadurch gekennzeichnet, daß die Hülle aus dem Stoff gemäß einem der Ansprüche 1 bis 10 besteht.

## Claims

1. A composition having high resistance to the propagation of fire, the composition comprising at least one polymer selected from polyolefins, polybutylene terephthalate, polymethyl methacrylate, polyamides, and polycarbonates, initially free from fire-retarding material and under said conditions referred to as base material, and including a silicone and a calcium carbonate incorporated in said base material, characterized in that it further includes, also incorporated in said base material, a salt of a metal selected from lead, magnesium, cobalt, iron, nickel, and aluminum.

2. A composition according to claim 1, characterized in that it comprises, relative to 100 parts of its own weight, more than 40 parts of said base material, less than 40 parts of calcium carbonate, less than 30 parts of silicone, and less than 10 parts of salt of the selected metal.

3. A composition according to claim 1 or 2, characterized in that it comprises, relative to 100 parts of its own weight, 45 to 55 parts of said base material, 20 to 40 parts of calcium carbonate, 10 to 20 parts of silicone, and less than 5 parts of salt of the selected metal.

4. A composition according to any one of claims 1 to 3, characterized in that the base material is a polymer or a mixture of polymers on which functional groups are grafted.

5. A composition according to any one of claims 1 to 4, characterized in that it further includes at least one processing agent, selected in particular from an oil, a plasticizer, an anti-oxidizing agent, an agent against UV penetration, and a silane.

6. A composition according to any one of claims 1 to 5, characterized in that said base material comprises a polyolefin and in particular a copolymer of ethylene.

7. A composition according to any one of claims 1 to 5, characterized in that said base material is a thermoplastic material selected from polyolefins, polybutylene terephthalate, polyamides, and polycarbonates.

8. A composition according to any one of claims 1 to 7, characterized in that it is cross-linked.

9. A composition according to any one of claims 1 to 8, characterized in that said salt is a stearate of the selected metal.

10. A composition according to any one of claims 1 to 8, characterized in that said salt of the selected metal is selected from lead salts based on carboxylic acids, in particular lead stearate, and lead sulfates.

11. A cable that is resistant to fire propagation, having a conductive core surrounded by an insulating and/or protective covering, characterized in that said covering is constituted by the composition according to any one of claims 1 to 10.
